# FASCICULE DE BREVET EUROPEEN

(11) **EP 2 311 650 B1**
(45) Date de publication et mention de la délivrance du brevet: **24.04.2013**
(21) Numéro de dépôt: 10011532.8
(22) Date de dépôt: 29.09.2010
(51) Int. Cl.: B60B 5/02, B60B 21/08, B60B 21/10, B60B 21/02

(54) **Jante composite et roue comportant une telle jante**
Verbundfelge und mit einer solchen Felge ausgestattetes Rad
Composite rim and wheel comprising such a rim

(30) Priorité: 15.10.2009 FR 0904951
(43) Date de publication de la demande: 20.04.2011
(73) Titulaire: MAVIC S.A.S., 74370 Metz-Tessy (FR)
(72) Inventeur: Saillet, Benoît, 73410 Albena (FR)

(56) Documents cités:
- EP-A2- 2 030 765
- FR-A1- 2 898 541
- US-A- 5 975 645
- US-A1- 2003 107 260
- US-A1- 2008 174 168

## Description

L'invention concerne une jante pour une roue à rayons, notamment une jante pour roue de vélo à rayons. L'invention concerne également une roue comprenant une telle jante.

De façon connue, une jante pour vélo présente un profil annulaire au moins en partie en forme de caisson qui comprend un ou deux ponts, respectivement un pont inférieur, un pont supérieur et deux parois latérales reliées par ces ponts qui sont prolongées vers l'extérieur par des ailes pour former avec le pont supérieur un canal de réception du pneu, ces ailes définissant des crochets pour l'accrochage des pneus. La jante est reliée à un moyeu par les rayons qui sont accrochés au pont inférieur.

Les jantes sont généralement réalisées à l'aide d'un profilé métallique, généralement en matériau léger mais résistant tel qu'un alliage d'aluminium ou autre.

Il est, d'autre part, connu d'avoir un habillage de jante en matériau composite ayant une section transversale effilée allant en décroissant depuis le bas du profilé métallique en direction du moyeu.

Dans le cas de cette jante connue, l'habillage a un rôle aérodynamique et participe partiellement à la rigidification de la jante. L'habillage est fixé par exemple par collage, sur les parois latérales du profilé métallique, sur une partie de la hauteur de celui-ci, le haut du profilé restant non recouvert pour fournir des surfaces de freinage métallique destinés à coopérer avec les freins du vélo, le freinage sur des surfaces en matériau composite étant réputé moins efficace.

Etant donné que l'habillage participe peu à la rigidification de la jante, on peut le réaliser avec suffisamment de souplesse pour le déformer et l'assembler sur un profilé métallique, réalisé au préalable et par conséquent non-déformable.

Par le US5975645 on connaît également une construction de jante mixte métal / composite, dans laquelle un profilé métallique à un seul pont est prolongé en direction de l'axe de la roue par un corps en matériau composite en forme de bulbe, et ce corps en matériau composite est fixé, par collage, sur la face inférieure du pont du profilé métallique. Dans ce mode de réalisation le corps en matériau composite participe à la rigidification de la jante et les parois latérales du profilé métallique sont utilisées pour le freinage.

Cette construction a pour but de résister aux dégagements de chaleur importants causés par le freinage, notamment en vélo dit VTT (vélo tout-terrain) et de remédier aux problèmes de freinage sur des surfaces en matériau mixtes acier/carbone ayant des coefficients de dilatation très différents.

D'autre part, étant donné que l'habillage est réalisé d'une seule pièce, au préalable et qu'il est non-déformable, il ne serait pas possible de l'assembler par collage sur un profilé métallique également non-déformable. C'est pourquoi, dans le procédé décrit, on place d'abord le profilé métallique, préalablement cintré pour qu'il ait la forme d'une roue mais dont les deux extrémités ne sont pas encore jointes, et par conséquent déformable, autour de l'habillage composite, avant d'en joindre ensemble les deux extrémités.

Dans le document FR 2898541 qui forme l'état de la technique le plus proche selon le préambule de la revendication 1, on décrit un autre type de construction de jante mixte métal / composite dans laquelle un habillage en matériau composite remonte le long des parois latérales du profilé métallique de façon à les masquer complètement et à donner l'illusion d'une jante tout en matériau composite. Dans ce type de construction, le freinage se fait contre une paroi mixte de la jante, c'est à-dire comprenant une épaisseur d'alu recouverte d'une épaisseur composite. L'habillage en matériau composite est fixé sur le profilé métallique par collage lors de la polymérisation de la partie composite, le profilé métallique étant mis en place dans le moule de polymérisation de la partie composite en même temps que le reste des composants. Cette solution de collage par polymérisation pose d'importants problèmes de tenue du collage dans le temps, notamment pour ce type particulier de jante. En effet, la résine utilisée pour la polymérisation du composite et servant à "coller entre elles les fibres du composite assurent alors une fonction supplémentaire, laquelle étant le collage de l'habillage composite avec le profilé métallique. Or, cette fonction supplémentaire, va être très sollicitée au cours de la vie du produit, lors des phases de fieinage. L'énergie thermique générée lors du freinage va à la longue endommager le collage du profilé métallique avec l'habillage composite.

IL est également connu d'avoir des jantes tout en carbone, ces jantes ne sont en général pas adaptées pour une utilisation avec des pneus non tubulaires car il est difficile d'obtenir avec du matériau composite des profilés avec des zones de crochet ayant une résistance isotropique pour l'accrochage des pneus. De telles jantes sont donc en général réservées à une utilisation avec des boyaux. Bien entendu, il serait possible de réaliser de telle jante, tout en carbone, avec des zones renforcées avec des épaisseurs de carbone excédentaires de façon à en augmenter la résistance aux effort de gonflage, mais ces jantes seraient plus lourdes, alors que l'utilisation du carbone est préférée par rapport à d'autres matériaux moins onéreux, en partie pour sa légèreté.

Le but de la présente invention est de fournir une jante permettant de remédier aux inconvénients de la technique antérieure.

Un but est notamment de fournir une jante la plus légère possible, et ayant un bon profil aérodynamique.

Un autre but est de fournir un concept de jante compatible à la fois avec une utilisation pneu et boyau.

Un autre but de l'invention de fournir un procédé de fabrication d'une jante de cycle dans laquelle un profilé métallique non-déformable est réalisé, au-préalable, puis placé dans un moule avec les divers constituants de l'habillage composite (fibres, résine).

Le but de l'invention est également de fournir une jante combinant un profilé métallique et un babillage composite, dont le freinage, c'est-à-dire le contact des patins de freinage sur la jante, est assuré sur l'habillage qui a une tenue dans le temps améliorée.

Ces buts sont atteints dans la jante selon la présente invention, qui est du type comprenant un profilé métallique et un habillage en matériau composite fixé sur chacune des parois latérales du profilé, sur sensiblement toute la hauteur de celles-ci, ledit habillage composite comportant une pluralité de fibres noyées dans une matrice qui est une première résine; et caractérisé en ce que ladite jante comprend un adhésif comprenant une matière distincte de ladite première résine et destinée à assurer le collage entre ledit profilé métallique et ledit habillage composite.

Ces buts sont également atteints par la fourniture d'une jante pour cycle comportant un profilé métallique; un habillage en matériau composite constitué par des fibres noyés dans une matrice qui recouvre, au moins, sur une portion de celui-ci, ledit profilé métallique et comportant, en outre, un élément écarteur qui est intercalé entre ledit profilé et ledit habillage.

Dans un mode de réalisation de invention, ledit profilé métallique comporte au moins deux parois latérales reliées par un pont et ledit habillage comportant au moins deux flancs, chacun des flancs recouvrant une desdites parois latérales caractérisé en ce ledit élément écarteur est intercalé entre chacune des parois latérales et le flanc qui la recouvre.

Dans un autre mode de réalisation de l'invention, ledit élément écarteur est placé au contact des deux parois latérales et du pont du profilé.

De préférence, l'habillage est constitué par des fibres haute performance noyées dans une première résine

De préférence, l'élément écarteur à une épaisseur comprise entre 0,05 mm et 0,2 mm; il peut être constitué de fibres ou de billes noyées dans une deuxième résine, cette deuxième résine pouvant être différente ou identique à la première résine.

On obtient ainsi une jante qui extérieurement présente l'esthétique d'une jante complètement carbone, tout en étant compatible avec une utilisation avec des pneus, puisque le profilé métallique peut comporter, sur ses parois latérales, des zones de crochet adéquates pour la fixation de ceux-ci.

Par ailleurs le matériau composite qui remonte le long des parois latérales du profilé métallique participe à la résistance mécanique dudit profilé et permet notamment d'augmenter la résistance de celui-ci et de la zone de crochets à la contrainte de gonflage du pneu dans le cas d'une jante pour pneus. Cela permet donc d'optimiser le poids du profilé métallique et donc de la jante dans son ensemble. Par ailleurs la géométrie du profilé définit une géométrie déterminée de la jante dans la zone de freinage et on s'est aperçu que, de façon surprenante, cette meilleure définition de la géométrie permet en fait d'améliorer de façon importante la qualité du freinage, par rapport à des jantes entièrement composite connues.

Ces buts sont également atteints par la fourniture d'un cycle et d'une roue comportant une jante telle que décrite ci-dessus.

De toute façon l'invention sera mieux comprise et d'autres caractéristiques de celle-ci seront mises en évidence à l'aide de la description qui suit en référence au dessin schématique annelé dans lequel:
- la figure 1 est une vue en perspective d'une roue selon l'invention,
- la figure 2 est une vue en coupe d'une jante selon un mode de réalisation de l'invention,
- la figure 3 est une vue de détail de la jante décrite à la figure 1.

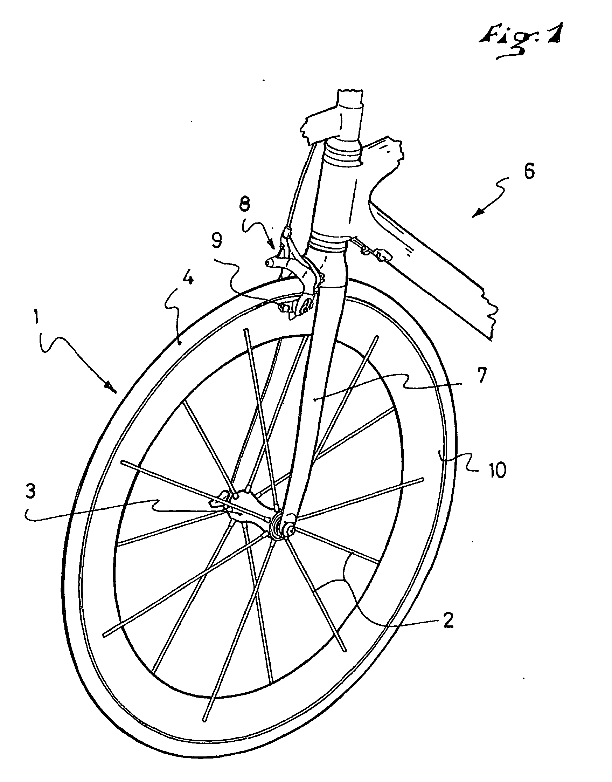

La figure 1 est une vue en perspective partielle d'un vélo équipé d'une roue selon l'invention. Le vélo 6 comprend entre autre une fourche avant 7 entre les branches de laquelle est montée une roue 1. De manière connue la roue 1 comporte une jante périphérique 10 et un moyeu central 3. Entre le moyeu 3 et la jante, une pluralité de rayons 2 sont disposés.

Le vélo 6 comporte également un dispositif de freinage qui repartit l'effort de freinage sur la roue avant 1 et sur la roue arrière (non représentée). Le frein avant 8 fonctionne par application de deux patins 9 sur la jante 10. Chacun des deux patins est monté à l'extrémité d'un étrier pivotant. Un actionnement par câble, commandé depuis le guidon au moyen d'un levier, fait pivoter les étriers de façon à presser les patins 9 contre la jante 10. Les portions des faces latérales de la jante contre lesquelles sont appliqués les patins sont appelés flanc de freinage 33. Les flancs de freinage constituent les surfaces latérales extérieures de la jante sur une hauteur "h" comprise entre 6 mm et 12 mm, de préférence entre 8 mm et 10 mm.

Les flancs 33 sont des surfaces annulaires sensiblement planes, parallèles au plan médian de la roue, le plan médian étant le plan de symétrie de la roue perpendiculaire à l'axe de celle-ci. Dans certains cas, ces surfaces peuvent faire un angle très faible avec le plan médian, auxquels cas les flancs ne sont pas rigoureusement plan mais sont des surfaces tronconiques.

Les flancs 33 sont situés dans les zones les plus éloignées de l'axe de la roue à proximité du pneumatique.

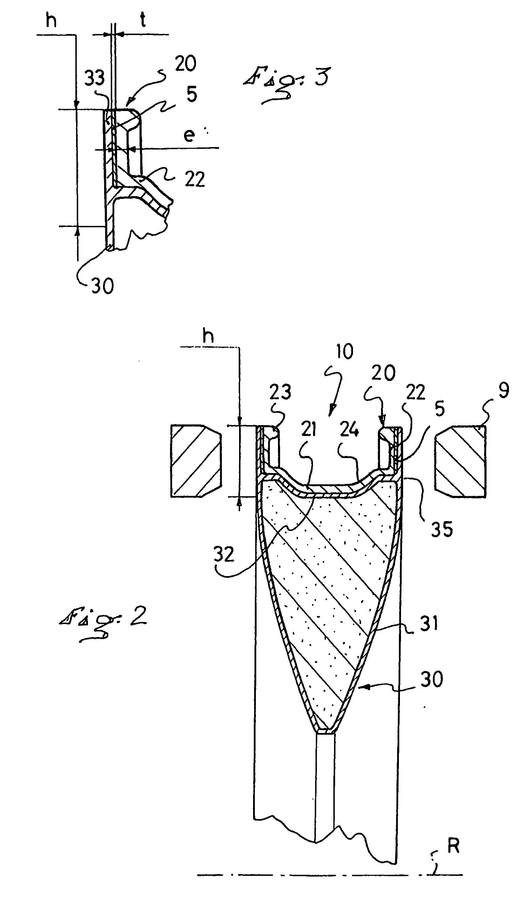

La figure 2 montre une section de la jante 10 selon l'invention. Cette jante 10, qui de façon classique a une forme annulaire, comporte un profilé métallique 20 et un habillage 30 en matériau composite. Il s'agit d'une jante destinée à être utilisée avec un pneumatique à tringle. Bien entendu, ce n'est pas une limitation de la portée de l'invention car on pourra également mettre en oeuvre invention pour des jantes prévues pour recevoir des boyaux.

Le profilé métallique 20 a sensiblement la forme d'un U ouvert vers l'extérieur de la jante et comporte un pont 21 sensiblement horizontal sur le dessin, c'est-à-dire sensiblement parallèle à l'axe de révolution R de la jante. Dans l'exemple représenté ce pont 21 n'est pas tout à fait rectiligne et présente une partie en creux 24 dans sa zone médiane. Il pourrait également être rectiligne. Le profilé métallique 20 comporte par ailleurs deux parois latérales 22, en l'occurrence sensiblement verticales sur le dessin et s'étendant sensiblement perpendiculairement au pont 21 ou à l'axe R. Ces deux parois latérales 22 sont donc sensiblement parallèles entre elles et reliées l'une à l'autre par le pont 21. C'est au niveau de ces deux parois latérales que les patins de frein viendront s'appuyer.

Chacune de ces parois latérales 22 se termine à son extrémité libre par un crochet 23, qui de façon connue en soi est destiné à permettre l'accrochage d'un pneu (non représenté sur le dessin). Le profilé métallique 20 est obtenu par extrusion et est ensuite cintré pour obtenir la forme annulaire souhaitée. Le profilé métallique est en alliage métallique léger et ayant de grandes caractéristiques de résistance mécanique et est notamment en alliage d'aluminium, de magnésium ou acier fin.

L'habillage 30 en matériau composite a dans l'exemple représenté sensiblement la forme d'un V comportant deux branches 31 fixées et recouvrant chacune des parois latérales 22, sur sensiblement toute la hauteur de celles-ci, y compris dans la zone de freinage 25 (cf. freins F représentés schématiquement sur la figure), et s'étendant ensuite vers le bas, c'est-à-dire en direction de l'axe de révolution R de la jante en se rejoignant pour former le V.

L'habillage en matériau composite 30 comporte également une partie sensiblement horizontale 32 recouvrant la surface inférieure du pont 21 du profilé métallique.

L'habillage 30 est constitué d'un mélange d'une première résine par exemple epoxy et de fibres, par exemple fibres de carbones, fibre de verre, kevlar^{®}......etc. De préférence, l'habillage 30 est réalisé avec des fibres hautes performance, qui associent un module de Young très élevé pour un poids raisonnable, En pratique on utilisera des fibres de carbone, éventuellement des fibres de bore.

Par sa forme en V, cet habillage 30 confère à la jante un profil aérodynamique très apprécié.

Par ailleurs l'habillage 30 participe également à la résistance mécanique de la jante et du profilé métallique 20 dans son ensemble, aussi bien au niveau des parois latérales 22 que du pont 21. Selon le matériau utilisé pour le profilé métallique et / ou l'épaisseur de celui-ci, on peut envisager de supprimer la partie 32 de l'habillage 30.

En remontant sur toute la hauteur desdites parois latérales 22, l'habillage 30, 35 permet d'augmenter la résistance du profilé dans la zone des crochets et permet donc d'augmenter la résistance de ce profilé à la contrainte de gonflage du pneu, en s'opposant à l'ouverture du profilé sous l'effet dudit gonflage.

Cette construction permet donc de diminuer au maximum la taille du profilé métallique, qui ne comporte ici qu'un seul pont et donc d'optimiser au maximum le poids de l'ensemble profilé métallique / matériau composite. En pratique le profilé métallique 10 peut être prévu de façon que sa hauteur h n'excède pas une valeur de 10 mm, même avec un profilé dit fin, c'est-à-dire dont les parois ont une épaisseur de 0,7 mm.

Par ailleurs contrairement aux idées reçues, le fait que l'habillage carbone 30 remonte jusque dans la zone de freinage, et constitue de ce fait les flancs de freinage 33, ne pénalise pas le freinage proprement dit, du fait que le profilé métallique fixé dessous, et en l'occurrence ses parois latérales 22, garantit en fait la géométrie de la zone de freinage comme par exemple la planéité des faces de freinage.

Conformément à l'invention, et comme on peut le voir sur la figure 3 entre le profilé métallique 20 et l'habillage 30, est intercalé un élément écarteur 5. Dans le mode de réalisation décrit ici, l'élément écarteur 5 est placé contre les parois latérales 22 du profilé 20, au niveau des flancs de freinage 33. L'élément écarteur 5 est réalisé dans un matériau différent de celui utilisé pour l'habillage 30 et de celui utilisé pour le profilé métallique 20. De préférence, on choisit un matériau qui ne couple électrolytiquement pas, ou très faiblement avec l'aluminium. Toutefois, il est important de choisir un matériau qui résiste bien au cycle thermique et de pression de la polymérisation.

Dans le mode de réalisation présenté en exemple, l'élément écarteur pourra être réalisé en noyant des billes de verre dans une deuxième résine, appelée résine de collage, ou encore en utilisant des fibres de verre ou des fibres de polyester, elles aussi prises dans une matrice de résine. L'épaisseur "t" de l'écarteur 5 est relativement faible. En pratique on préférera que l'épaisseur "t" soit comprise entre 0,05 mm et 0,2 mm.

La deuxième résine, la résine de collage, est différente de la première résine, dite résine de stratification laquelle est utilisée pour réaliser l'habillage 30. Il faut cependant assurer une compatibilité de viscosité entre la résine de collage et la résine de stratification, notamment pour éviter que la résine de stratification chasse une résine de collage trop fluide. En pratique on choisira des résines dont les courbes de viscosité (rhéologie) sont proches. La présence de la résine de collage dans une espace suffisamment important dans la zone séparant le profilé de l'habillage est garanti par l'élément écarteur 5.

Dans le cas où le profilé est réalisé en alliage d'aluminium, on utilisera une résine de collage ayant de bonne caractéristique de collage contre l'aluminium, par exemple une résine ayant une tenue supérieure à 30 MPa à température ambiante et strictement supérieure à 15 MPa à 100°C, sur un test de collage en cisaillement du type EN 2243-1.

Dans une variante de l'invention, on choisira la même résine pour résine de stratification et résine de collage.

Dans une autre variante de l'invention, non représentée, l'élément écarteur est placé dans toutes les zones d'interface entre le profilé et l'habillage composite, c'est-à-dire le long des parois 22 et le long du pont 21. Dans ce cas, l'élément écarteur 5 peut être réalisé en un seul élément dont la section à un profil en U.

Bien entendu la présente invention ne se limite pas aux modes de réalisation illustrés ci-avants à titre d'exemples non limitatifs et en englobe tous les modes de réalisation similaires ou équivalents.

## Revendications

1. Jante pour cycle comportant un profilé métallique (20) et un habillage (30) en matériau composite constitué par des fibres noyés dans une matrice qui recouvre, au moins sur une portion ledit profilé métallique, **caractérisé en ce qu'**un élément écarteur (5) est intercalé entre ledit profilé (20) et ledit habillage (30).

2. Jante pour cycle selon la revendication 1, **caractérisée en ce que** ledit profilé métallique (20) comporte au moins deux parois latérales (22) reliées par un pont (21) et ledit habillage (30) comportant au moins deux flancs (33), chacun des flancs recouvrant une desdites parois latérales (22), et **en ce que** ledit élément écarteur (5) est intercalé entre chacune des parois latérales (22) et le flanc (33) qui la recouvre.

3. Jante selon la revendication précédente, **caractérisée en ce que** ledit élément écarteur (5) est placé au contact des deux parois latérales (22) et du pont (21).

4. Jante selon la revendication précédente, **caractérisée en ce que** ledit élément écarteur (5) a une épaisseur comprise entre 0,05 mm et 0,2 mm.

5. Jante selon la revendication précédente, **caractérisée en ce que** des surfaces de freinage sont ménagés sur les faces extérieures desdits flancs (33).

6. Jante selon la revendication précédente, **caractérisée en ce que** ledit habillage (30) est constitué par des fibres haute performance.

7. Jante selon l'une des revendications précédente, **caractérisée en ce que** l'élément écarteur (5) comprend une pluralité de billes.

8. Jante selon l'une des revendications précédente, **caractérisée en ce que** l'élément écarteur (5) comprend des fibres.

9. Roue (1) pour cycle comportant une jante selon l'une des revendications précédentes.

10. Cycle (6) comportant au moins un roue (1) selon la revendication précédente et un frein (8) équipé de deux patins de frein (9) prévus pour venir frotter pendant les phases de freinage sur ledit habillage (30).

## Claims

1. Rim for a bicycle comprising a metal profile (20) and a covering (30) made of a composite material consisting of fibres embedded in a matrix which covers, at least in part, said metal profile, **characterized in that** a spacer element (5) is inserted between said profile (20) and said covering (30).

2. Rim for a bicycle according to Claim 1, **characterized in that** said metal profile (20) comprises at least two side walls (22) connected by a bridge (21) and said covering (30) comprises at least two flanks (33), each of the flanks covering one of said side walls (22), and **in that** said spacer element (5) is inserted between each of the side walls (22) and the flank (33) covering that side wall.

3. Rim according to the preceding claim, **characterized in that** said spacer element (5) is placed in contact with the two side walls (22) and the bridge (21).

4. Rim according to the preceding claim, **characterized in that** the thickness of said spacer element (5) is between 0.05 mm and 0.2 mm.

5. Rim according to the preceding claim, **characterized in that** braking surfaces are created on the outer faces of said flanks (33).

6. Rim according to the preceding claim, **characterized in that** said covering (30) is made of high-performance fibres.

7. Rim according to one of the preceding claims, **characterized in that** the spacer element (5) comprises a plurality of beads.

8. Rim according to one of the preceding claims, **characterized in that** the spacer element (5) comprises fibres.

9. Wheel (1) for a bicycle comprising a rim according to one of the preceding claims.

10. Bicycle (6) comprising at least one wheel (1) according to the preceding claim and a brake (8) having two brake pads (9) provided for rubbing against said covering (30) during braking.

## Patentansprüche

1. Felge für ein Rad, umfassend ein Metallprofil (20) und eine Verkleidung (30) aus Verbundstoff, bestehend aus Fasern, die in eine Matrix eingelassen sind, die zumindest auf einem Abschnitt das Metallprofil bedeckt, **dadurch gekennzeichnet, dass** ein Abstandselement (5) zwischen dem Profil (20) und der Verkleidung (30) angeordnet ist.

2. Felge für ein Rad nach Anspruch 1, **dadurch gekennzeichnet, dass** das Metallprofil (20) mindestens zwei Seitenwände (22) umfasst, die durch einen Steg (21) verbunden sind, und die Verkleidung (30) mindestens zwei Seiten (33) umfasst, wobei jede der Seiten eine der Seitenwände (22) bedeckt, und dass das Abstandselement (5) zwischen jeder der Seitenwände (22) und der Seite (33), die sie bedeckt, angeordnet ist.

3. Felge nach dem vorhergehenden Anspruch, **dadurch gekennzeichnet, dass** das Abstandselement (5) mit den zwei Seitenwänden (22) und dem Steg (21) in Kontakt angebracht ist.

4. Felge nach dem vorhergehenden Anspruch, **dadurch gekennzeichnet, dass** das Abstandselement (5) eine Dicke zwischen 0,05 mm und 0,2 mm aufweist.

5. Felge nach dem vorhergehenden Anspruch, **dadurch gekennzeichnet, dass** Bremsflächen auf den Außenseiten der Seiten (33) vorgesehen sind.

6. Felge nach dem vorhergehenden Anspruch, **dadurch gekennzeichnet, dass** die Verkleidung (30) von Hochleistungefasern gebildet ist.

7. Felge nach einem der vorhergehenden Ansprüche, **dadurch gekennzeichnet, dass** das Abstandselement (5) eine Vielzahl von Kugeln umfasst.

8. Felge nach einem der vorhergehenden Ansprüche, **dadurch gekennzeichnet, dass** das Abstandselement (5) Fasern umfasst.

9. Rad (1) für ein Fahrrad, umfassend eine Felge nach einem der vorhergehenden Ansprüche.

10. Fahrrad (6), umfassend mindestens ein Rad (1) nach dem vorhergehenden Anspruch und eine Bremse (8), die mit zwei Bremsbacken (9) versehen ist, die dazu vorgesehen sind, während der Bremsphasen an der Verkleidung (30) zu reiben.
